# EUROPEAN PATENT SPECIFICATION

(11) **EP 3 594 627 B1**
(45) Date of publication and mention of the grant of the patent: **19.05.2021**
(21) Application number: 19180747.8
(22) Date of filing: 18.06.2019
(51) Int. Cl.: G01D 5/14, G01D 5/244

(54) **METHOD OF DETECTING THE ABSOLUTE POSITION OF A ROTATABLE ELEMENT AND MULTI-TURN ABSOLUTE ENCODER**
DETEKTIONSMETHODE DER ABSOLUTEN POSTION EINES ROTIERENDEN ELEMENTS UND ABSOLUTER MULTI-TURN ENKODER
MÉTHODE DE DÉTÉCTION DE POSITION ABSOLUE D'UN ÉLÉMENT ROTATIF ET ENCODEUR MULTI-TURN ABSOLU

(30) Priority: 11.07.2018 IT 201800007113
(43) Date of publication of application: 15.01.2020
(73) Proprietor: Tecno Elettrica Ravasi S.r.l., 23887 Olgiate Molgora (LC) (IT)
(72) Inventor: BLASI, Flavio, 23887 Olgiate Molgora (LC) (IT)
(74) Representative: Gregorj S.r.l.

(56) References cited:
- EP-A1- 0 836 072
- WO-A1-2011/042190
- WO-A1-2017/013452
- DE-A1-102005 031 806
- DE-A1-102005 040 150
- DE-C1- 4 407 474
- FR-A1- 2 861 459
- JP-A- H01 224 622

## Description

### Technical field of the invention

The present invention refers to a method of detecting the absolute position of a rotatable element by means of a multi-turn encoder, and to a multi-turn encoder. Particularly, the method refers to the detection of the absolute position in plural turns of the rotatable element.

### Prior art

Devices for detecting the absolute position of a rotatable element (typically a shaft) in plural turns, particularly multi-turn absolute encoders of different types, are known in the art. Typically, such encoders comprise a single-turn absolute sensor suitable to detect the absolute position of the rotatable element in a single turn, and a turn counting module suitable to detect the number of turns performed by the rotatable element. By combining the detections from each of these components it is possible to obtain the absolute position of the rotatable element in a known plurality of turns.

Among the known encoders, a type provides the presence of a Hall sensor and a magnet as a single-turn absolute sensor, and a pair of magnetically actuatable switches, typically reed switches, as a turn counter. During the rotation of the magnet, the two switches are alternatively actuated. The number of turns is determined by counting the activation of one of the switches. The absolute position is continuously monitored by the absolute sensor during the rotation of the element in order to determine the rotation direction, or the absolute position in plural turns of the rotatable element.

### <Insert page 2a>

A problem of these known encoders is that they require to continuously monitor the absolute position of the rotatable element. Such monitoring entails a high consumption of electric energy and is disadvantageous particularly when the electric energy supply is delivered by an exhaustible source, e.g. batteries or harvesting systems.

### Brief summary of the invention

Consequently, the object of the present invention consists of providing a multi-turn absolute encoder and also a method of detecting the absolute position of a rotatable element which enable to consume a smaller amount of electric energy.

FR 2 861 459 A1 discloses a rotational measurement system capable of establishing a rotational position of a rotating element. The system includes an encoder and two primary sensors to detect the angular position of the encoder.

WO 2011/042190 A1 discloses an encoder for measuring the angular position of a shaft. The encoder includes a lighting device which, when illuminated, indicates the multi-turn position of the shaft.

JP H01 224622 A discloses a multi-rotation absolute encoder provided with two reed switches which are turned on with a 90 degrees delay.

WO 2017/013452 A1 discloses a device for sensing the relative rotary position of first and second parts about a rotation axis.

DE 10 2005 040150 A1 discloses a contact-less electronic angle sensor for use in motor vehicle.

DE 44 07 474 C1 discloses a rotary angle sensor having a fine rotation angle sensor connected to a shaft for absolute measurement of the angular position of the shaft over one rotation and a counter arrangement for counting the complete rotations of the shaft.

EP 0 836 072 A1 discloses a rotary transducer having at least one high resolution sensor and one low resolution sensor and an arrangement for evaluating the sensor signals. Each of the high and low resolution sensors contain a respective permanent magnet.

DE 10 2005 031806 A1 discloses a rotation angle sensor with a disk-shaped or ring-shaped carrier which is fixed on a shaft transversely to its longitudinal axis and has a track of magnetic north and south poles.

In the scope of such task, a further object of the invention consists of providing a multi-turn absolute encoder and a method of detecting the absolute position of a rotatable element which enable to detect anomalies during the step of determining the multi-turn absolute position of the rotatable element.

These and other objects are met by a method of detecting the absolute position of a rotatable element according to claim 1, and by a multi-turn absolute encoder according to claim 8.

Dependent claims define possible advantageous embodiments of the invention.

### Brief description of the drawings

For gaining a better comprehension of the invention and appreciating the advantages thereof, some exemplifying non-limiting embodiments thereof will be described in the following with reference to the attached figures, in which:

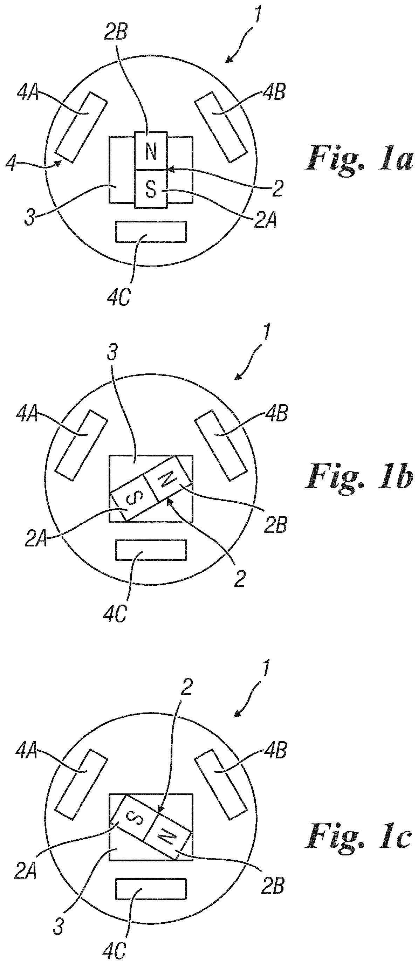

Figures 1a-1c schematically illustrate the encoder according to the invention during three operative successive steps.

### Description of embodiments of the invention

A multi-turn absolute encoder, according to the invention, is indicated by reference 1 in the attached figures. The multi-turn absolute encoder 1 is of the type discussed in the introductory part of the present description.

Generally, the multi-turn absolute encoder 1 is used for sensing the absolute position of a rotatable element, for example, a shaft, in plural turns. The multi-turn absolute encoder 1 comprises a magnet 2 connected to the rotatable element so that they rotate together, an absolute detection device 3 for detecting the absolute position of the element in a single turn, and a multi-turn detection group 4 for determining the number of turns performed by the rotatable element.

The magnet 2 is a standard magnet comprising two poles 2A, 2B, typically a north pole and a south pole.

In the preferred embodiment of the invention, the absolute detection device 3 is a Hall-effect sensor, however, it can be replaced by any other components suitable to sense the absolute position of a rotatable element in a single turn. The Hall-effect sensor is suitably disposed in proximity of the magnet 2 for following the rotation thereof, as illustrated in the figures.

According to the present invention, the multi-turn detection group 4 comprises at least three actuatable switches 4A, 4B, 4C disposed around the magnet 2 in order to be capable of distinguishing at least three different positions of the rotatable element.

Insofar, during the rotation of the rotatable element, actuating the switches 4A, 4B, 4C enables to identify three predetermined positions of the magnet 2. The magnet 2, cyclically adopting these three positions, determines sequentially an actuation of the switches, particularly in a cyclic sequence, enabling to count the number of turns performed by the magnet 2, and therefore by the rotatable element, and also to determine the rotation direction of the element.

This enables to determine the number of turns without continuously monitoring the absolute position of the element in a single turn, with attendant electric energy savings with respect to the known multi-turn absolute encoders. By the encoder 1 according to the invention, the absolute position of the element in a single turn is read only when the multi-turn absolute position is required to the sensor.

In the preferred embodiment, the multi-turn detection group 4 comprises three switches 4A, 4B, 4C, however, the number of the switches can be more according to the needs. More positions of the magnet 2 are determined, more the device will be reliable in signalling possible anomalies.

Preferably, the switches 4A-4C are disposed so that each of them is singularly actuated by the magnet 2. "Singularly actuated" means, in the field of the present invention, that when one of the switches is actuated by the magnet 2, the others are not actuated.

In the example illustrated in the figures, the multi-turn detection group 4 comprises three switches 4A, 4B, 4C, disposed so that the switches 4A, 4B, 4C are not aligned two by two with the rotation center of the magnet 2. Particularly, the switches are angularly distributed around the magnet 2, however they can be disposed in a different way provided that they are actuatable one by one by the magnet 2.

Preferably, the switches 4A-4C are of a magnetically actuatable type and are actuated by the magnet 2. Still more preferably, they are reed switches, however they could be switches of other types provided that they are actuatable by the magnet 2. Alternatively, it is possible to provide switches actuatable in a different way, for example mechanically by the rotatable element.

Advantageously, the multi-turn absolute encoder 1 comprises also a counter (not illustrated) for counting the number of actuations of the switches 4A, 4B, 4C, particularly by the magnet 2. More preferably, the encoder 1 comprises two counters for counting the number of actuations of the switches 4A, 4B, 4C performed separately by both the two poles 2A, 2B of the magnet 2 (each counter counts the actuations caused by a respective pole 2A, 2B). Preferably, the counter (or counters) belongs to a software managing the operation of the encoder.

The present invention refers also to a method of sensing the absolute position of a rotatable element, typically a shaft or similar, by a multi-turn absolute encoder as herein before described.

More precisely, the method is performed by means of a multi-turn absolute encoder 1 which comprises a magnet 2 connected to the rotatable element in order to rotate together; an absolute detection device 3 for detecting the absolute position of the element in a single turn; and a multi-turn detection group 4 for counting the number of turns performed by the rotatable element and containing at least three magnetically actuatable switches 4A, 4B, 4C positioned around the magnet 2 so that it is possible to determine at least three different positions of the magnet 2 in a single turn.

The method, according to the invention, comprises a step of detecting a sequence of actuations of the switches 4A-C.

According to a preferable embodiment, the sequence of actuations of the switches 4A-C is cyclic. Insofar, when the magnet arrives at the end of the cycle, it is known the magnet 2 (and consequently also the rotatable element) has rotated by a turn. Further, by taking into account that due to the actuations it is possible to identify three different positions of the magnet 2 in a single turn, reading the sequence of the actuations enables also to identify the rotation direction of the magnet 2.

An example of the sequence of actuations is illustrated as a non-limiting example in Figures 1a-1c. It is observed that in this example the switches 4A-C are of the magnetically actuatable type and are indifferently actuated by one or the other poles 2A, 2 of the magnet 2.

The magnet 2 actuates the switch 4C by means of the pole 2A in the configuration of the encoder in Figure 1a.

By a clockwise rotation, it is obtained the configuration shown in Figure 1b, in which the switch 4B is actuated by the other pole 2B of the magnet 2.

By continuing clockwise rotating the magnet 2, it is obtained the configuration of Figure 1c, in which the switch 4A is actuated by the first pole 2A of the magnet 2.

By continuing clockwise rotating the magnet 2 in order to complete a whole tun, the switches 4C, 4B, 4A and 4C are activated, so that the configuration of Figure 1a is obtained again. It is observed that in the configuration of the switches 4A-C of the illustrated example, the switches 4A-C are alternatively actuated by the first pole 2A and second pole 2B of the magnet 2.

The clockwise rotation of the magnet 2 generates the sequence 4C-4B-4A-4C-4B-4A-4C. If there is a counterclockwise rotation of the magnet 2, the sequence 4C-4A-4B-4C-4A-4B-4C would be obtained. It is understood that generating a sequence of actuations enables not only to count the number of turns performed by the element, but also to know the rotation direction, because the obtained sequence is different according to the rotation direction.

Preferably, by following the sequence of actuations of the switches 4A-C, the method comprises a step of separating the sequences of actuations relative to each of the two poles 2A, 2B of the magnet 2.

As hereinbefore discussed, in the illustrated example, the switches 4A-C are alternatively actuated by the first 2A and second pole 2B of the magnet 2. The sequence generated by the first pole 2A is 4C-4A-4B-4C, while the sequence generated by the second pole 2B is 4B-4C-4A.

Preferably, provision is made for determining the number of turns performed by a first of the two poles 2A, 2B by counting the actuations of the switches 4A-C by means of a first counter. Still more preferably, the actuations performed by each of the two poles 2A, 2B are counted by means of two counters, each of them counting the actuations of a respective pole 2A, 2B.

According to the obtained sequence of actuations, a provision is made for increasing or decreasing the number of actuations for each or both the poles 2A, 2B by one, taking into account the rotation direction of the rotatable element.

Then, the method preferably provides to determine the number of turns performed by the rotatable element by counting the actuations of the switches 4A-C performed by a first 2A of the two poles 2A, 2B of the magnet 2, and dividing such count by the number of switches 4A-C. Still more preferably, the number of turns performed by the rotatable element is determined by counting the actuations of the switches 4A-C performed also by the second 2B of the two poles 2A, 2B of the magnet 2, and by dividing such count by the number of switches 4A-C. In both cases, the rotation direction of the rotatable element is taken into account, for increasing or decreasing the number of actuations, as a function of the sequence of actuations.

Counting the number of actuations is separately performed on each of the poles 2A, 2B of the magnet 2. If the result of dividing the counts is a number with decimals, these latter are neglected.

Possibly a provision can be made so that the number of turns obtained by counting the actuations performed by the first pole 2A of the magnet 2 is compared with the number of turns obtained by counting the actuations performed by the second pole 2B of the magnet 2. If the two obtained values are equal, the determination of the number of performed turns is validated.

On the contrary, if the two values are different, this means a malfunction of the encoder 1. Such malfunction can be due to a malfunction of one of the switches 4A-4C, which should be substituted.

According to a particularly advantageous embodiment of the method, reading the absolute position of the rotatable element in a single turn is performed only when the absolute position in plural turns of the element is required to the encoder 1. Consequently, a continuous reading of the absolute position of the rotatable element in a single turn by means of the absolute detection device 3 is avoided, determining a substantial energy saving with respect to the known encoders.

The absolute position in plural turns of the rotatable element is known by reading the absolute position in a single turn by the absolute detection device 3 and by adding to it the counted number of performed turns by counting the actuations of the switches 4A-C, as hereinbefore explained.

According to an advantageous aspect, the method provides to neglect consecutive actuations of the same switch 4A-C. Consequently, possible oscillations of the shaft are not considered when the actuations of the switches 4A-C are counted. Particularly, when one of the switches 4A, 4B, 4C is actuated, for example the switch 4C as shown in Figure 1a, an actuation of the switch 4A or switch 4B is expected in order to continue counting the actuations.

A person skilled in the art could introduce many additions, modifications or substitutions of elements with other operatively equivalent ones to the described embodiments of the multi-turn absolute encoder, in order to meet specific contingent needs without falling out of the scope of the attached claims.

## Claims

1. Method of detecting the absolute position of a rotatable element by means of a multi-turn absolute encoder (1);
the multi-turn absolute encoder (1) comprising a single magnet (2), the magnet (2) being connected to the rotatable element in order to rotate with the latter; an absolute detection device (3) for detecting the absolute position of the element in a single turn; and a multi-turn detection group (4) for determining the number of turns performed by the element and containing at least three actuatable switches (4A, 4B, 4C) and positioned around the magnet (2) in order to be capable of distinguishing at least three different positions of the element in a single turn;
the method comprising a step of detecting a sequence of actuations of the switches (4A, 4B, 4C).

2. Method according to claim 1, wherein the switches (4A, 4B, 4C) are of a magnetically actuatable type and are actuated by the magnet (2).

3. Method according to claim 1 or 2, further comprising a step of separating the actuation sequences regarding each of the two poles (2A, 2B) of the magnet (2).

4. Method according to claim 3, wherein the number of turns performed by the rotatable element is determined by a count of the actuations of the switches (4A, 4B, 4C) caused by a first (2A) of the two poles (2A, 2B) of the magnet (2), considering the rotation direction of the rotatable element, and the division of such count by the number of switches (4A, 4B, 4C).

5. Method according to claim 4, wherein the number of turns performed by the rotatable element is determined by the count of the actuations of the switches (4A, 4B, 4C) caused by the second (2B) of the two poles (2A, 2B) of the magnet (2), considering the rotation direction of the rotatable element, and the division of such count by the number of switches (4A, 4B, 4C).

6. Method according to claim 5, wherein the number of turns obtained by the count of the actuations caused by the first pole (2A) of the magnet (2) is compared with the number of turns obtained by the count of the actuations caused by the second pole (2B) of the magnet (2).

7. Method according to one or more of the preceding claims, wherein reading the absolute position of the element in a single turn is only performed when the absolute position over a plurality of turns of the element is required to the encoder (1) .

8. Multi-turn absolute encoder, for detecting the absolute position of a rotatable element over a plurality of turns, comprising:
a single magnet (2), the magnet (2) being connected to the element in order to rotate with the latter;
an absolute detection device (3) for detecting the absolute position of the rotatable element in a single turn; and
a multi-turn detection group (4) for determining the number of turns performed by the element;
the multi-turn detection group (4) comprising at least three actuatable switches (4A, 4B, 4C) disposed around said magnet (2) in order to be capable of distinguishing at least three different positions of said rotatable element in a single turn.

9. Multi-turn absolute encoder according to claim 8, wherein the switches (4A, 4B, 4C) are disposed around the magnet (2) so that each of said switches (4A, 4B, 4C) is individually actuated by the magnet (2).

10. Multi-turn absolute encoder according to claim 8 or 9, wherein the multi-turn detection group (4) comprises three switches (4A, 4B, 4C) disposed in order to not be aligned two by two with the rotation center of the magnet (2).

## Patentansprüche

1. Methode des Detektierens der absoluten Position eines rotierbaren Elements mittels eines Absolut-Multiturn-Encoders (1);
wobei der Absolut-Multiturn-Encoder (1) einen einzelnen Magneten (2) umfasst, wobei der Magnet (2) mit dem rotierbaren Element verbunden ist, um mit diesem zu rotieren; eine absolute Detektionsvorrichtung (3) zum Detektieren der absoluten Position des Elements in einer einzigen Umdrehung; und eine Multiturn-Detektionsgruppe (4) zum Bestimmen der Anzahl der vom Element ausgeführten Umdrehungen, die mindestens drei betätigbare Schalter (4A, 4B, 4C) enthält und um den Magneten (2) herum angeordnet ist, um in der Lage zu sein, mindestens drei verschiedene Positionen des Elements in einer einzigen Umdrehung zu unterscheiden;
wobei die Methode einen Schritt des Detektierens einer Folge von Betätigungen der Schalter (4A, 4B, 4C) umfasst.

2. Methode nach Anspruch 1, wobei die Schalter (4A, 4B, 4C) von einem magnetisch betätigbaren Typ sind und durch den Magneten (2) betätigt werden.

3. Methode nach Anspruch 1 oder 2, ferner umfassend einen Schritt des Trennens der Betätigungssequenzen bezüglich jedes der beiden Pole (2A, 2B) des Magneten (2).

4. Methode nach Anspruch 3, wobei die Anzahl der von dem rotierbaren Element ausgeführten Umdrehungen durch eine Zählung der Betätigungen der Schalter (4A, 4B, 4C), die durch einen ersten (2A) der beiden Pole (2A, 2B) des Magneten (2) verursacht werden, unter Berücksichtigung der Drehrichtung des rotierbaren Elements und der Division dieser Zählung durch die Anzahl der Schalter (4A, 4B, 4C) bestimmt wird.

5. Methode nach Anspruch 4, wobei die Anzahl der vom rotierbaren Element ausgeführten Umdrehungen durch die Zählung der Betätigungen der Schalter (4A, 4B, 4C), die durch den zweiten (2B) der beiden Pole (2A, 2B) des Magneten (2) verursacht werden, unter Berücksichtigung der Drehrichtung des rotierbaren Elements und der Division dieser Zählung durch die Anzahl der Schalter (4A, 4B, 4C) bestimmt wird.

6. Methode nach Anspruch 5, wobei die durch die Zählung der vom ersten Pol (2A) des Magneten (2) verursachten Betätigungen erhaltene Betätigungszahl mit der durch die Zählung der vom zweiten Pol (2B) des Magneten (2) verursachten Betätigungen erhaltenen Betätigungszahl verglichen wird.

7. Methode nach einem oder mehreren der vorhergehenden Ansprüche, wobei das Lesen der absoluten Position des Elements in einer einzelnen Umdrehung nur dann durchgeführt wird, wenn die absolute Position über eine Vielzahl von Umdrehungen des Elements für den Encoder (1) erforderlich ist.

8. Absolut-Multiturn-Encoder zum Detektieren der absoluten Position eines rotierbaren Elements über eine Vielzahl von Umdrehungen, umfassend:
einen einzelnen Magneten (2), wobei der Magnet (2) mit dem Element verbunden ist, um mit diesem zu rotieren;
eine absolute Detektionsvorrichtung (3) zum Detektieren der absoluten Position des rotierbaren Elements in einer einzelnen Umdrehung; und
eine Multiturn-Detektionsgruppe (4) zum Bestimmen der Anzahl von Umdrehungen, die vom Element ausgeführt werden;
wobei die Multiturn-Detektionsgruppe (4) mindestens drei betätigbare Schalter (4A, 4B, 4C) umfasst, die um den Magneten (2) herum angeordnet sind, um in der Lage zu sein, mindestens drei verschiedene Positionen des rotierbaren Elements in einer einzigen Umdrehung zu unterscheiden.

9. Absolut-Multiturn-Encoder nach Anspruch 8, wobei die Schalter (4A, 4B, 4C) um den Magneten (2) herum angeordnet sind, so dass jeder der Schalter (4A, 4B, 4C) einzeln durch den Magneten (2) betätigt wird.

10. Absolut-Multiturn-Encoder nach Anspruch 8 oder 9, wobei die Multiturn-Detektionsgruppe (4) drei Schalter (4A, 4B, 4C) umfasst, die so angeordnet sind, dass sie nicht zu zweit mit dem Rotationszentrum des Magneten (2) ausgerichtet sind.

## Revendications

1. Procédé de détection de position absolue d'un élément rotatif au moyen d'un encodeur multitours absolu (1) ;
l'encodeur multitours absolu (1) comprenant un seul aimant (2), l'aimant (2) étant relié à l'élément rotatif afin de tourner avec ce dernier ; un dispositif de détection absolue (3) pour détecter la position absolue de l'élément en un seul tour ; et un groupe de détection multitours (4) pour déterminer le nombre de tours effectués par l'élément et contenant au moins trois commutateurs actionnables (4A, 4B, 4C) et positionnés autour de l'aimant (2) afin d'être capable de distinguer au moins trois positions différentes de l'élément en un seul tour ;
le procédé comprenant une étape de détection d'une séquence d'actionnements des commutateurs (4A, 4B, 4C).

2. Procédé selon la revendication 1, dans lequel les commutateurs (4A, 4B, 4C) sont d'un type à actionnement magnétique et sont actionnés par l'aimant (2).

3. Procédé selon la revendication 1 ou 2, comprenant en outre une étape de séparation des séquences d'actionnement concernant chacun des deux pôles (2A, 2B) de l'aimant (2).

4. Procédé selon la revendication 3, dans lequel le nombre de tours effectués par l'élément rotatif est déterminé par un comptage des actionnements des commutateurs (4A, 4B, 4C) provoqués par un premier (2A) des deux pôles (2A, 2B) de l'aimant (2), en considérant le sens de rotation de l'élément rotatif, et la division de ce comptage par le nombre de commutateurs (4A, 4B, 4C).

5. Procédé selon la revendication 4, dans lequel le nombre de tours effectués par l'élément rotatif est déterminé par le comptage des actionnements des commutateurs (4A, 4B, 4C) provoqués par le second (2B) des deux pôles (2A, 2B) de l'aimant (2), en considérant le sens de rotation de l'élément rotatif, et la division de ce comptage par le nombre de commutateurs (4A, 4B, 4C).

6. Procédé selon la revendication 5, dans lequel le nombre de tours obtenu par le comptage des actionnements provoqués par le premier pôle (2A) de l'aimant (2) est comparé au nombre de tours obtenu par le comptage des actionnements provoqués par le second pôle (2B) de l'aimant (2).

7. Procédé selon une ou plusieurs des revendications précédentes, dans lequel la lecture de la position absolue de l'élément en un seul tour n'est effectuée que lorsque la position absolue sur une pluralité de tours de l'élément est requise pour l'encodeur (1).

8. Encodeur multitours absolu, pour détecter la position absolue d'un élément rotatif sur une pluralité de tours, comprenant :
un seul aimant (2), l'aimant (2) étant relié à l'élément pour tourner avec ce dernier ;
un dispositif de détection absolue (3) pour détecter la position absolue de l'élément rotatif en un seul tour ; et
un groupe de détection multitours (4) pour déterminer le nombre de tours effectués par l'élément ;
le groupe de détection multitours (4) comprenant au moins trois commutateurs actionnables (4A, 4B, 4C) disposés autour dudit aimant (2) afin d'être capable de distinguer au moins trois positions différentes dudit élément rotatif en un seul tour.

9. Encodeur multitours absolu selon la revendication 8, dans lequel les commutateurs (4A, 4B, 4C) sont disposés autour de l'aimant (2) de sorte que chacun desdits commutateurs (4A, 4B, 4C) est individuellement actionné par l'aimant (2).

10. Encodeur multitours absolu selon la revendication 8 ou 9, dans lequel le groupe de détection multitours (4) comprend trois commutateurs (4A, 4B, 4C) disposés de manière à ne pas être alignés deux par deux avec le centre de rotation de l'aimant (2).
